# EUROPEAN PATENT APPLICATION

(11) **EP 2 157 534 A1**
(43) Date of publication of application: **24.02.2010**
(21) Application number: 08105074.2
(22) Date of filing: 19.08.2008
(51) Int. Cl.: G06Q 10/00

(54) **Method and system for the customization of informatics applications, based on the use of a spreadsheet program**

(71) Applicant: PRB S.r.l., 20135 Milano (IT)
(72) Inventor: Carbonera, Antonio, 27100, Pavia (IT); Forlani, Paolo, 20135, Milano (IT)

(57) **Abstract**

A computer program for managing the workflow of business dossiers is customized by using a spreadsheet program, like Microsoft Excel, to store the results of the business dossier flow analysis. The same spreadsheet program, exploiting its "macro" programming language, is used to automatically create a structure of disk subfolders and a structure of tables and data in a database, corresponding to the business dossier workflow of the organization that has to be managed with the program.
The operation of the workflow management program is then based on the disk subfolder structure and database tables and data generated, thus automating all the customization phase of the program.

## Description

The present invention relates to computer programs and systems used to manage the flow of activities in organizations.

For many years, programs to manage the flow of business dossiers and items, or "workflow management programs" have been available and are widely diffused. These programs simplify and rationalize the execution of the work, because they allow to assign dossiers to the persons that have to manage them, to define the expected path for each type of dossier and to check the flow of dossiers, pointing out the dossiers that are stopped, delaying or near to deadline. Other additional functions further simplify the work, for instance the capability to send and receive messages connected to the business dossier to/from colleagues and external correspondents.

Many different types of business dossier flow exist, according to the kind of organization that uses the workflow management program (for instance, a Bank uses dossiers different from those used by a Commercial Organization) and also according to the procedures and habits of the peculiar organization considered. Companies that produce and install workflow management programs therefore have always the necessity to customize, often quite extensively, the programs in order to adapt them to the necessities of each customer.

It would be extremely expensive to write a new program, or parts of an existing one, for the installation at every customer, due to the programming cost, to the possibility to introduce errors and to the impossibility to deploy updated versions of the programs, that should be customized again for every customer. For these reasons, for a long time the best workflow management programs have been based on fixed code and executable programs (the same for all customers) and on configuration tables that can be modified to adapt the operation of programs to the necessities of the customer: the customization, in that case, does not concern the code of the programs, but only the structure and contents of the customization tables. These tables may have any suitable format used in informatics, but typically relational databases, programmable in SQL language, are used along with files stored in appropriate disk folders.

To accomplish customization, in a first "analysis" phase, specialists of corporate organization analyze the business dossiers of the customer and the related documents and schematize their flow in charts. This phase is based on the reading of the corporate procedures and on the direct interview of the concerned workers.

In a second "translation" phase, informatics specialists trained on the application translate the flow charts into the form of customization tables.

Customization procedures, both in the first and the second phase, involve very high costs and times; in particular the second translation phase must be performed by specialists in informatics, with a different cultural background than people that perform the first phase.

The first analysis phase is anyway necessary, but the second phase could be performed, at least in part, by means of automatic systems.

Customization therefore involves a problem in terms of time, of cost and of complexity. The high cost is due both to the high usage of personnel time, and to the necessity to dedicate highly specialized personnel to execute the second phase.

To save time and cost of the second phase above described, several informatics methods have been devised and made: for instance, the following patents or applications can be cited:

US2007277153 - Development tool, method, and system for client server applications

W003036547 - A business process user interface generation system and method

US2006173908 - System and method for automated customization of a workflow management system.

The existence of these and other methods, devised by numerous experts of the sector, confirms the existence and the importance of the problem.

These methods achieve the purpose to reduce customization time and cost only partially, for several reasons:
- Customization tools are yet other complete informatics programs, thus have a high initial development cost and are subject to expenses for the correction of errors, the updates and the alignment with the improvements of the main workflow management program.
- Customization tools have their own user interface, often of a graphical type, that has to be purposely developed.
- This user interface, to simplify the development of customization tools, is normally made to be used by application specialists, because an interface usable by general type users would have a much more complex development.
- The knowledge of the customization program is not part of the general knowledge of informatics specialists: to perform the second phase also personnel already expert of the sector need a special training.

The method and the system, subject of the present invention, represent a solution of the problem that is much more efficient and simpler than the existing ones, as can be deduced by the following description.

Since the very beginnings of personal informatics, "spreadsheet" programs have been available. These programs are widely used, so that anybody with even a base knowledge of informatics know how to use them. It is not necessary here to describe how they work because, in fact, they are very well known. One of the most widely diffused of these programs is "Microsoft Excel" (registered trademark), named simply "Excel" in the following description.

Excel, like many other programs of its kind, gives also the capability to write "macros": parts of program incorporated in the spreadsheet, that are executed as a consequence of events predefined in the macros themselves and that can interact with the spreadsheet, for instance reading its structure and the contents of its cells. Macros are written in a suitable informatics language (VBA="Visual Basic for Applications" in the case of Excel) and can use functions with a great power. Examples of these functions are those that allow to create, modify and delete disk files and folders; those that allow to write files in any format, particularly in XML; and those that allow to create, modify and delete database tables and records.

Also before the present invention, the same personnel that performs the first workflow analysis phase and makes the related schematic diagrams, normally uses for convenience an Excel spreadsheet to annotate the workflow data as soon as they are obtained.

There are also programs used to organize the flow of activities in "Gantt" diagrams, such as Microsoft Project, that can be used to create similar workflow charts.

The subject of the present invention is the use of the Excel or similar program to perform automatically the second customization phase of a workflow management application.

With the present invention, the same spreadsheet that contains the schematics, by means of macros, creates the customization tables of the workflow management application program, cancelling the time and the work needed to perform the second phase of translation from schematics to tables. The creation of tables can be direct or through the use of an intermediate XML file, and also a disk folder structure that reflects the structure of the workflow and of its documents can be created in the file system of the computer.

Macros are written once and are inserted in the base Excel spreadsheet. This spreadsheet is then copied and used as a blank start-up spreadsheet to schematize each of the different customizations of the workflow management application.

Excel becomes the customization program itself, with the following advantages:
- There is no need to write an informatics program for the customization: it is sufficient to use Excel that, due to its diffusion, is also inexpensive, reasonably stable and error proof.
- The writing of macros inserted in the spreadsheet is simpler than the development of a complete customization informatics program.
- The user interface of Excel is widely known and can be used directly by specialists in organization analysis, without any training and with no need to employ specialists in informatics.

The second phase of the customization of the workflow management application is eliminated because it is automatically executed, after a simple confirmation, by the same Excel spreadsheet where the results of the organization analysis phase have been introduced.

In the following, a preferred embodiment of the present invention is described in detail, with the purpose to explain its operation in a practical case. The description references the accompanying drawings in which:

Figures numbered from 1 to 13 are partial representations of the single Excel speadsheet that is used to embody the invention. The spreadsheet has in fact as many as 48 columns and it is not possible to show it entirely in a single figure. In figures from 1 to 13, the first 4 columns (A,B,C,D) are always shown in the left part, while the other columns (from E to AV) are shown in small groups in the right part of the figure.

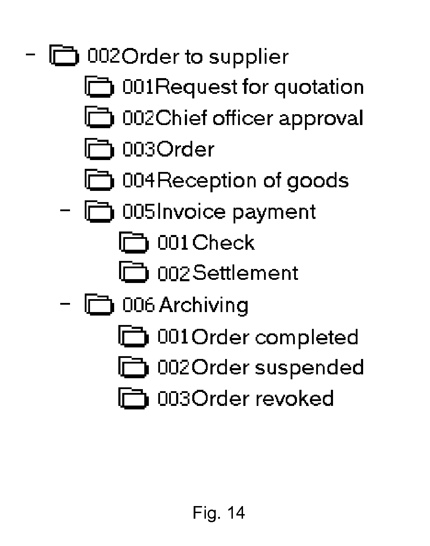

Figure 14 is an example of the folder structure generated with the method.

The rows in the Excel spreadsheet represent the dossier types and subtypes and the phases and subphases in the workflow. In the example, a simple business dossier type is shown, representing the flow of operations related to "order to supplier" in an organization. The Excel sheet can have as many rows as necessary to represent all operations and phases of the workflow; in the simple example, 9 rows are used and one more row is used at the top for descriptions.

An organization has many types of dossier types, often several hundreds: they can be represented as separate tables (represented by tabs in the bottom part of the Excel screen) in the Excel spreadsheet, or several Excel spreadsheets can be used.

The Excel spreadsheet, as mentioned above, is prepared and filled by experts in organization analysis during the first customization phase.

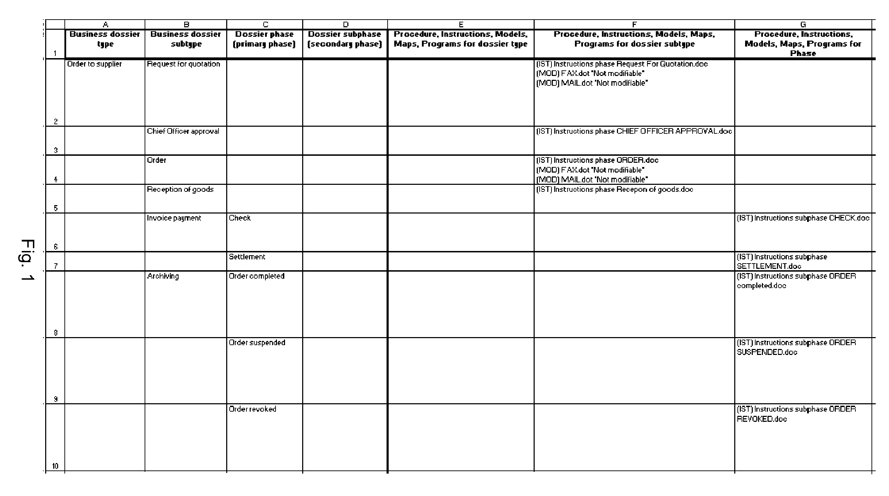

In Figure 1, columns from A to D and rows from 2 to 10, the different dossier types and subtypes and the phases and subphases are shown, representing the main steps involved in the overall "Order to Supplier" workflow of an organization.

Business dossier subtypes are:
- "Request for quotation"
- "Chief Officer approval"
- "Order"
- "Reception of goods"
- "Invoice payment"
- "Archiving".

Primary phases are:
- "Check" and "Settlement" in the "Invoice payment" sybtype
- "Order completed", "Order suspended" and "Order revoked" in the "Archiving" subtype.

In the example, secondary phases are not used; similarly, many other cells can be left empty, where there is no need for data in the cell to fully describe workflow.

The meaning of the other columns in Figure 1 is:
- Procedure, instructions, models, maps, programs for dossier type: in this cell there is a list of documents or programs that will be automatically recalled by the workflow management program when this dossier type is activated. Procedures are text documents that describe in detail how the operations have to be performed. Instructions are simpler documents that help the user in each phase. Models and maps are templates for documents that are generated or used in this phase. Programs are external programs that will be automatically started by the workflow management program when this dossier type is activated.
- Procedure, instructions, models, maps, programs for dossier subtype: similarly to the preceding point, they will be automatically recalled by the workflow management program when this dossier subtype is activated.
- Procedure, instructions, models, maps, programs for phase: similarly to the preceding point, they will be automatically recalled by the workflow management program when this phase is reached.

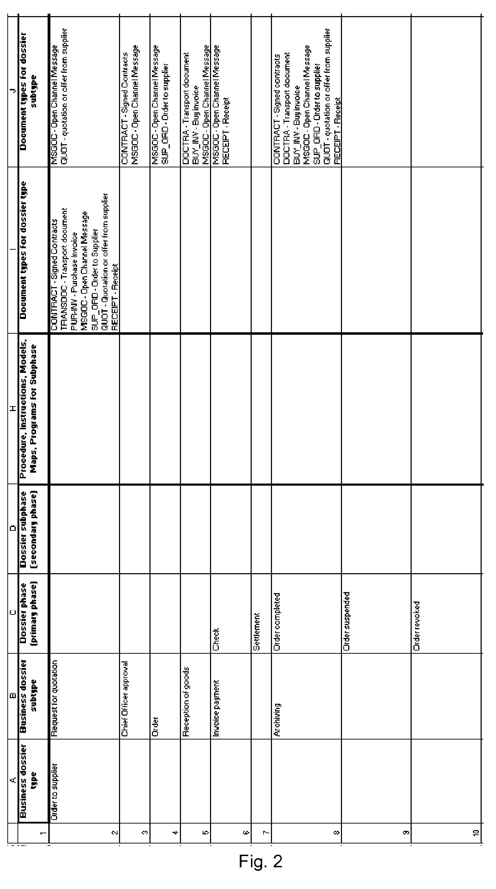

The meaning of the other columns in Figure 2 is:
- Procedure, instructions, models, maps, programs for subphase: similarly to the preceding point, they will be automatically recalled by the workflow management program when this subphase is reached.
- Document types for dossier type and dossier subtype: it is a list of the types of documents that are normally used; the workflow management program will allow the user to open documents of this type in this kind of dossiers.

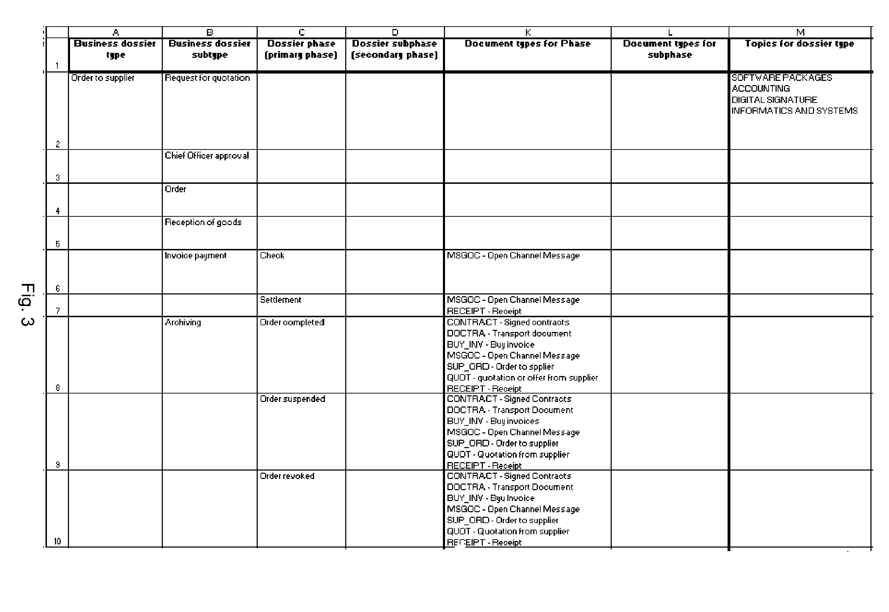

The meaning of the other columns in Figure 3 is:
- Document types for phase and for subphase: as in the points above, the workflow management program will allow the user to open documents of this type in the current phase and subphase.
- Topics for dossier type: it is a list of topics or arguments about the matter involved in this type. The workflow management program will use it to help the user.

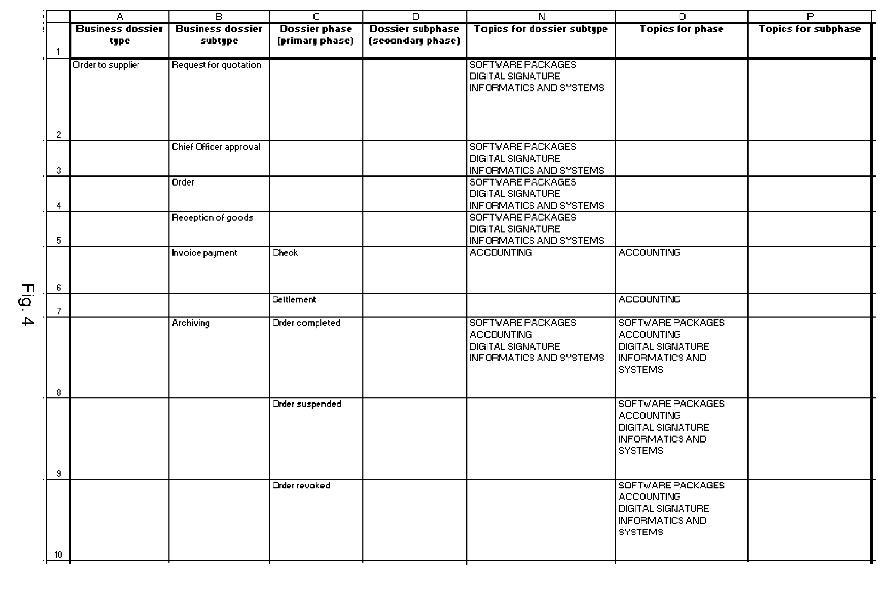

The meaning of the other columns in Figure 4 is:
- Topics for dossier subtype, phase and subphase: as in the point above, it is a list of topics or arguments about the matter involved in this type. The workflow management program will use it to help the user.

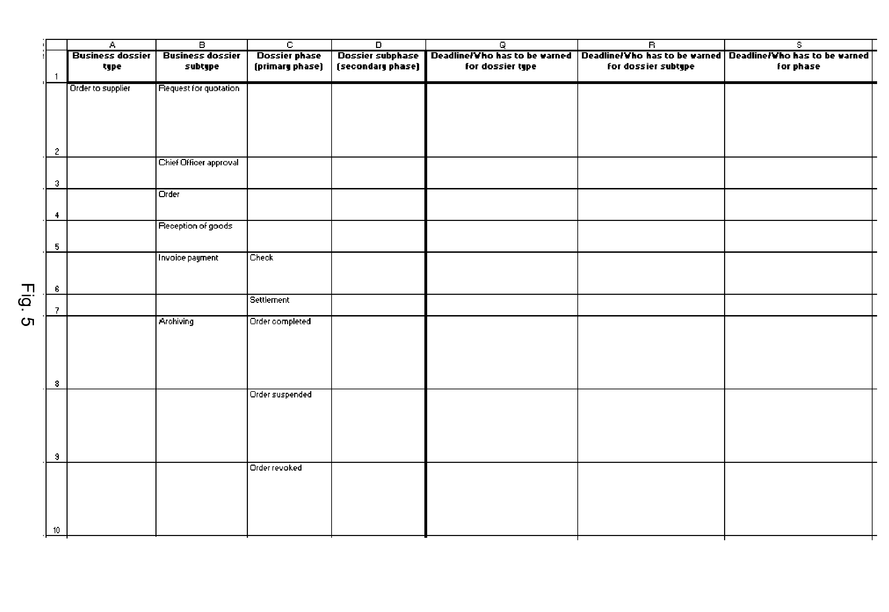

The meaning of the other columns in Figure 5 is:
- Deadline/Who has to be warned for dossier type, dossier subtype and phase: this is the final date/time for the actions involved. If this deadline expires, the workflow program will notify to the person listed in this cell that the deadline was reached.

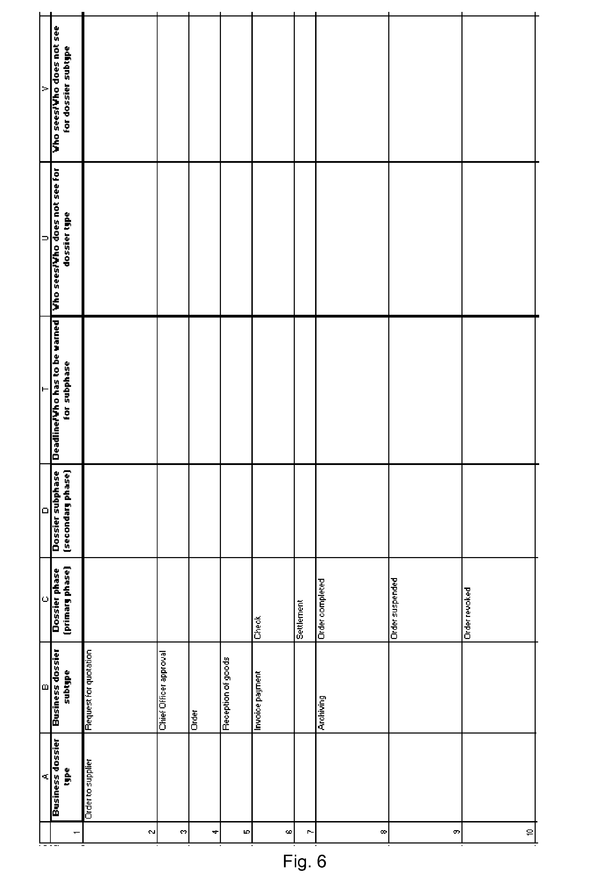

The meaning of the other columns in Figure 6 is:
- Deadline/Who has to be warned for subphase: this is the final date/time for the actions involved. If this deadline expires, the workflow program will notify to the person listed in this cell that the deadline was reached.
- Who sees/who does not see for dossier type and for dossier subtype: this cell allows to list the persons or departments that will be allowed by the workflow management program to see documents included in the dossier.

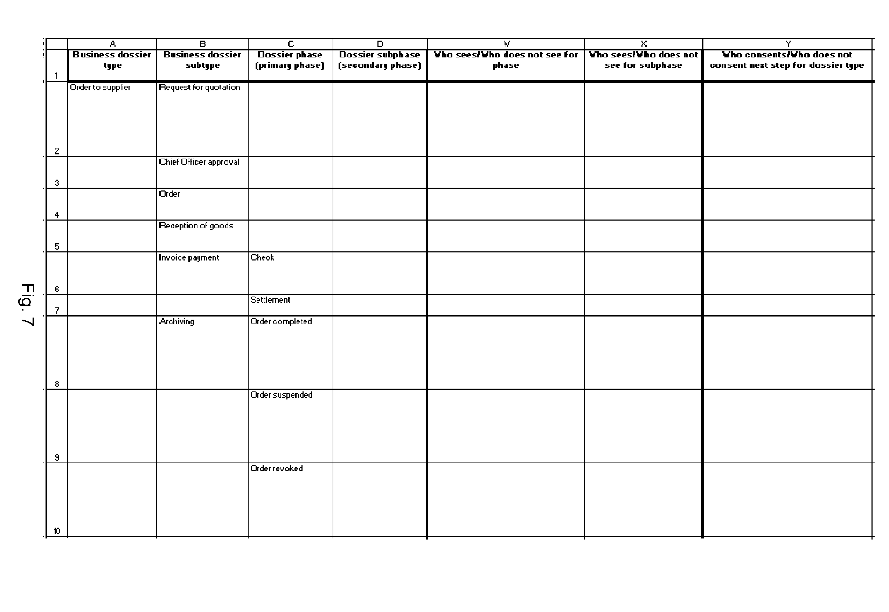

The meaning of the other columns in Figure 7 is:
- Who sees/who does not see for phase and for subphase: this cell allows to list the persons or departments that will be allowed by the workflow management program to see documents in the current phase and subphase.
- Who consent/who does not consent next step for dossier type: this cell allows to list the persons or departments that will be allowed by the workflow management program to move the flow to the next step predefined in the workflow.

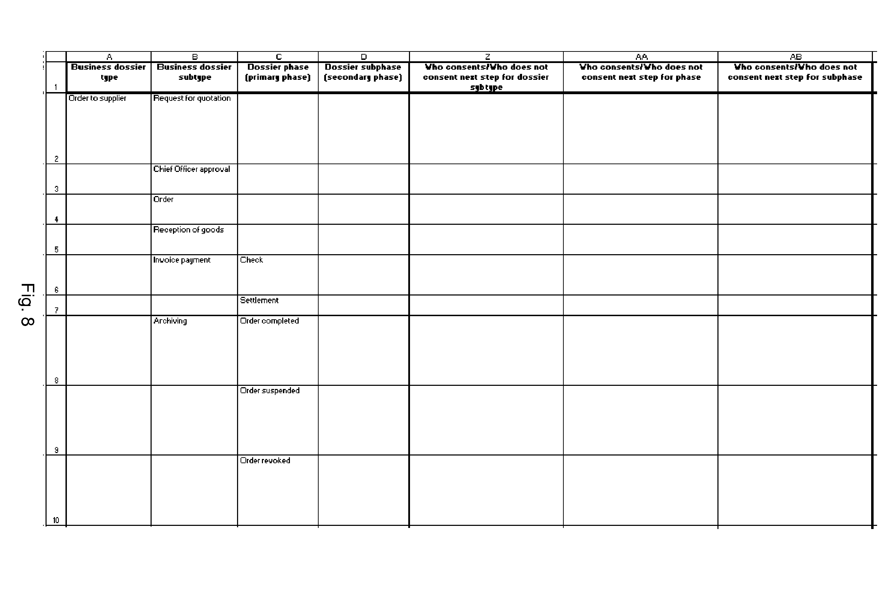

The meaning of the other columns in Figure 8 is:
- Who consent/who does not consent next step for dossier subtype, phase, subphase: as in the point above, this cell allows to list the persons or departments that will be allowed by the workflow management program to move the flow to the next step.

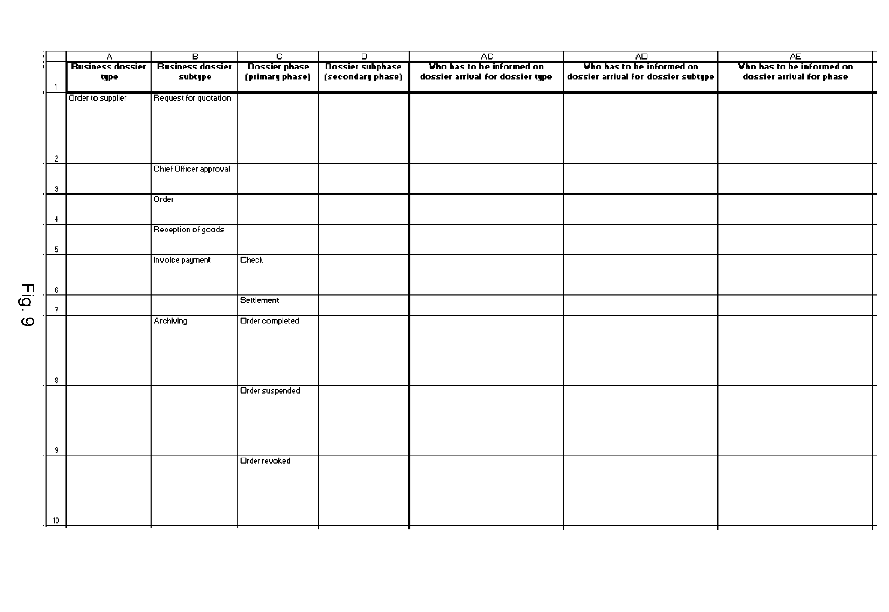

The meaning of the other columns in Figure 9 is:
- Who has to be informed on dossier arrival for dossier type, for dossier subtype, for phase: this cell allows to list the persons or departments that will be informed by the workflow management program when a dossier enters the system.

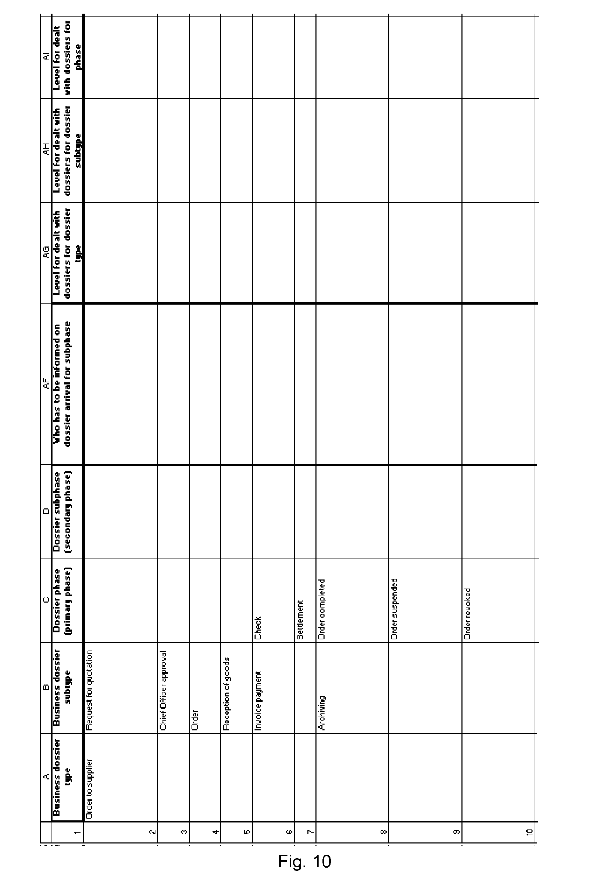

The meaning of the other columns in Figure 10 is:
- Who has to be informed on dossier arrival for subphase: this cell allows to list the persons or departments that will be informed by the workflow management program when a dossier enters the system in this subphase.
- Level for "dealt with" dossiers for dossier type, for dossier subtype, for phase: in this cell the next predefined level in the workflow diagram is indicated. The workflow management program will automatically move the dossier to this step as soon as the preceding one has been performed.

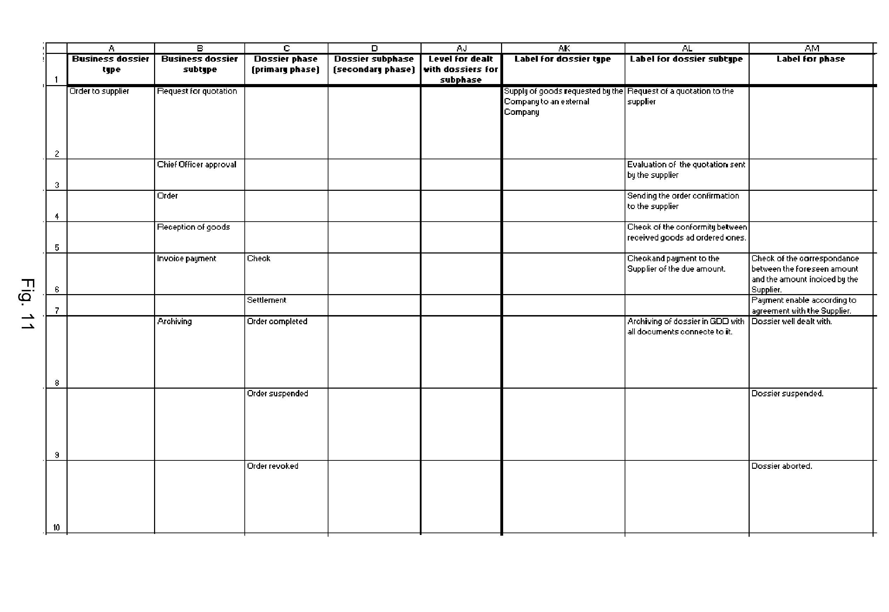

The meaning of the other columns in Figure 11 is:
- Level for "dealt with" dossiers for subphase: in this cell the next predefined level in the workflow diagram is indicated. The workflow management program will automatically move the dossier to this step as soon as the preceding one has been performed.
- Label for dossier type, for dossier subtype, for phase: labels are help to the user: the workflow management program will show the text taken from this cell in a small box on the screen, near the pointer of the mouse, when the pointer is moved by the user near the related item.

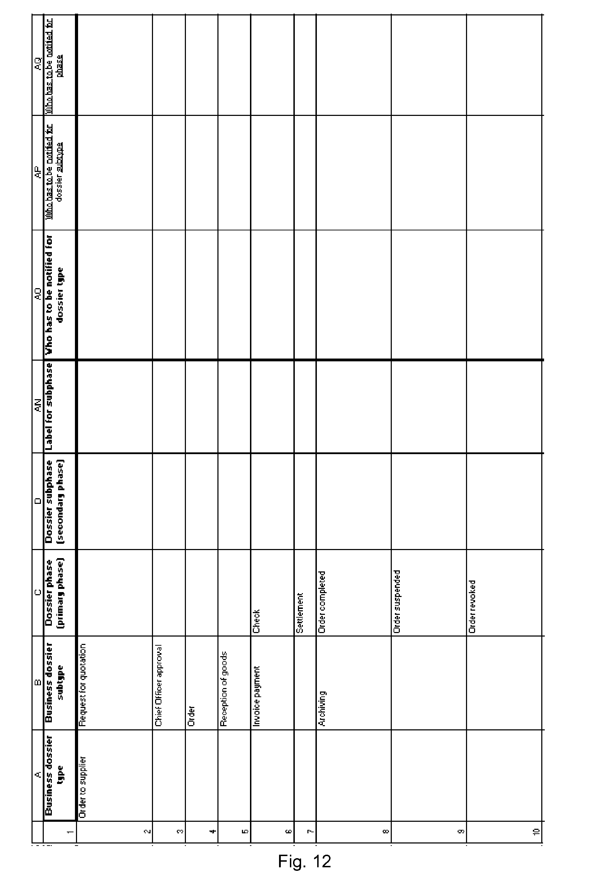

The meaning of the other columns in Figure 12 is:
- Label for subphase: as in the preceding point, the workflow management program will show the text from this cell in a small box on the screen, near the pointer of the mouse.

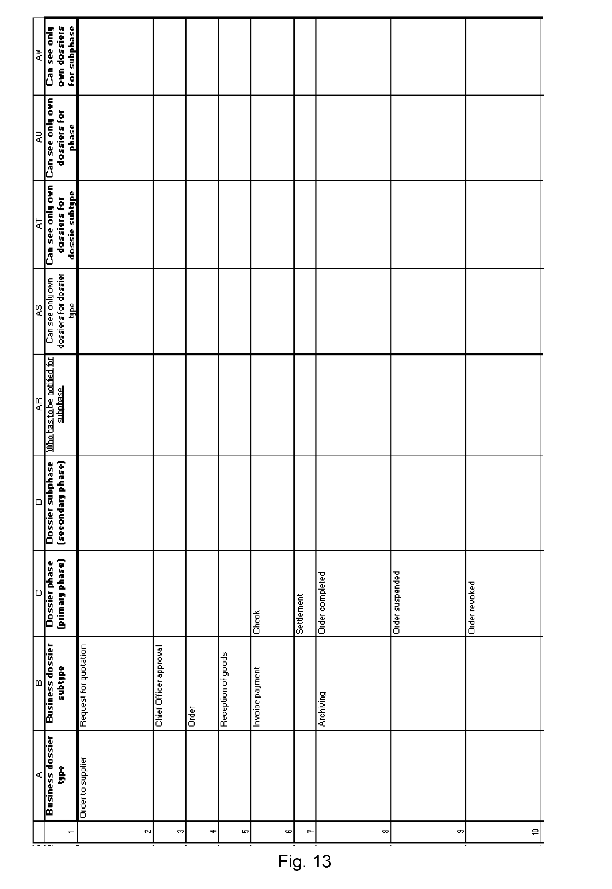

The meaning of the other columns in Figure 13 is:
- Can see only own dossiers for dossier type, for dossier subtype, for phase, for subphase: if this cell is enabled, the workflow management program will show the documents and the workflow only to the person who dealt with the same dossier up to the moment. Otherwise, documents and workflow can be seen also by other people with the same overall permissions in the system.

As said above, the first phase of customization of the workflow management program is performed by organization analysts who fill the cells in the Excel spreadsheet. At the end of this phase, the spreadsheet contains a detailed description of the workflow in the organization examined. It is also clear that all details, such as authorization levels, names of procedures and instructions, types of documents and so on are completely described in the spreadsheet itself.

There are several places in the spreadsheet where external files (documents, instructions, procedures and programs) are recalled. These documents are collected during the first phase of customization or analysis phase. There is the need to organize these documents in an ordered structure of disk folders in the informatics system to avoid losing or exchanging them. One of the operations that are automatically performed by the macros in the Excel spreadsheet is the generation of a complete structure of folders and subfolders that exactly reflects the structure of the workflow spreadsheet and where an appropriate folder is generated for each cell that involves one or more files or programs.

In figure 14, the disk folder structure automatically generated by the Excel spreadsheet for the example above is shown. The analysis specialists that collected the external files (documents, instructions, procedures and programs), after the folder generation, can organize the collected files in their appropriate folders. The disk folder structure is then copied in the working folder of the workflow management program, that will recall files exactly when needed by the workflow structure by reading or writing them in the expected position of the disk folder structure.

The Excel spreadsheet also checks, by means of appropriate macros, that all folders are correct and that the files recalled in the spreadsheet are correctly present in the appropriate folder, thus eliminating the possibility of lost or misplaced files.

The automatic customization of the workflow management program is not limited to the generation of a disk folder structure. In an another automatic customization phase, the customization system generates or modifies also the appropriate database tables that drive all the operation of the workflow management program.

In the preferred embodiment of the invention, this is performed by a separate program written in ".net Visual Basic" language, and the enclosed code example is taken from this program. This organization was chosen mainly for performance reasons, but the same result could be obtained using only the macro language of Excel itself. The separate program incorporates an "Excel object" and, through this object, it can operate on an Excel spreadsheet file directly, and in a way equivalent with the one available using an Excel macro.

Therefore it is clear that the same result can be obtained working on the Excel spreadsheet with several different techniques (Excel macros, separate programs incorporating an Excel object, and others like, for instance, using intermediate XML files for operations on databases) without going out from the spirit of the present invention.

To resume the operation of the automatic customization method, the main steps involved are:
- First workflow analysis: the operators collect all the information about workflow and insert it in the Excel spreadsheet described above
- First automatic customization phase: the Excel macro automatically prepares a disk folder structure to accommodate the documents, instructions, procedures and programs needed for the operation of the workflow management program
- Document placement: the operators place in their folders the documents, instructions, procedures and programs collected in the first phase
- Second automatic customization phase: the separate .net program automatically prepares a structure of customization database tables with all the data needed for the operation of the workflow management program
- Operation phase: the workflow management program uses database tables and documents, instructions, procedures and programs to perform its operation in a customized way.

As an example of the preferred embodiment of the invention, some significant parts of code are shown in the following pages.

Part of code number 1: Procedure, in Excel macro language, that creates the folder structure:

'-----

' Procedure : CreateFolders

' DateTime :

' Author :

' Purpose : Create folders of tree structure

' Return Type

' Parameters:

' Notes :

' Revisions :

'-----

'

Private Sub CreateFolders()

Dim strTemp As String

Dim strMsg As String

Dim ArrFolders As Variant

Dim i As Long

Dim IRet As Long

Dim sRet As String

Dim dlgResult As VbMsgBoxResult

Dim nPagelndex As Integer

Dim strMsgPause As String

On Error GoTo 0

On Error GoTo errGeneric

clsTrace.OutputTrace "Avvio creazione cartelle", 0, "CreateFolder - globalCreateTree"

'Check if this file is inserted in correct sub folder

strTemp = ThisWorkbook.FullName

ArrFolders = Split(strTemp, "\")

If UCase$(Trim$(ArrFolders(UBound(ArrFolders) - 1))) = UCase$(Trim$(SubFolder)) Then

'Check if client folder has length minor of max number characters

If Len(ArrFolders(UBound(ArrFolders) - 2)) <= MAX_LEN_CODE_CORR Then

Call CountRows

If g_colRowsCount.Count > 0 Then

g_blnContinueCheck = False

g_TypeControl = "La verifica e la successiva creazione delle cartelle è eseguita"

frmCountRow.Show (vbModal)

Else

g_blnContinueCheck = False

MsgBox "Impossibile eseguire verifica. Non vi sono cartelle da creare",vbExclamation,TTL_MSGBX

End If

If g_blnContinueCheck = True Then

'Check if name columns is correct

If CheckNameColumnlsCorrect(INIT_FOLDERS) = True Then

'Check if length of description of each node is minor than max length

sRet = CheckAllLengthNodeslsCorrect

Select Case sRet

Case "0" 'OK

'Check if in cell A2 there is a valid type folder

If CheckA2ValidTypeFolder = True Then

'Check if there are type folder with same name

IRet = CheckSameTypeFolders

'Check result

Select Case IRet

Case 0 'OK

'Check if in each type folders there are sub type folders with same name

IRet = CheckSameSubTypeFolders

Select Case IRet

Case 0 'OK

'Check if in each sub type folder there are phases with same name

IRet = CheckSamePhases

Select Case IRet

Case 0'OK

'Check if in each phases there are sub phases with same name

IRet = CheckSameSubPhases

Select Case IRet

Case 0 'OK

'Check integrity of tree GDP

sRet = ChecklntegrityTree

Select Case sRet

Case "0" 'Ok tree is integrity

'Create sub folder

sRet = CreateTreeFolders

'Check result

Select Case sRet

Case 0 'Folder create correctly

clsTrace.OutputTrace "Cartelle create con successo.", 65, "CreateFolder - globalCreateTree"

MsgBox "Struttura di cartelle per la GDP create correttamente. Ora verranno controllate sia le cartelle sul disco senza il corrispondente livello sul foglio di MS Excel, sia la presenza del livello'Pausa' .", vblnformation, TTL_MSGBX

sRet = CheckAllFolderExist

Select Case sRet

Case 0

If g_ColFolders.Count > 0 Then

'Open form to delete folders

frmTooFolder.Show vbModal

End If

'Check if there is level pause

sRet = CheckCorrectPause

Select Case sRet

Case "0"

'OK

MsgBox "Controllate le cartelle che non hanno il corrispondente livello sul foglio di MS Excel. Livello pausa impostato correttamente", vblnformation, TTL_MSGBX

Case "-1"

'Error

Case "2", "3"

strMsgPause = "II livello pausa non è stato impostato correttamente. Per impostarlo selezionare la cella per il livello 'Pausa' e premere il pulsante 'Imposta livello Pausa' sulla barra degli strumenti"

'There isn't level pause ot there are too levels pause

MsgBox strMsgPause, vbExclamation, TTL_MSGBX

End Select

Case -1 'Error

End Select

Case -1 'Error

End Select

Case "-1"'Error

Case "2" 'Sub type folder without type folder

clsTrace.OutputTrace "Cartelle non create. II sottotipo pratica "' & ActiveCell.Value & "' non ha il corrispondente tipo pratica", 45, "CreateFolder - globalCreateTree"

MsgBox "Impossibile creare le sottocartelle per la GDP. Il sottotipo pratica ''' & ActiveCell.Value & "' non ha il corrispondente tipo pratica", vbExclamation, TTL_MSGBX

Case "3" 'Phase without sub type folder

clsTrace.OutputTrace "Cartelle non create. La fase "' & ActiveCell.Value & "' non ha il corrispondente sotto tipo pratica", 45, "CreateFolder - globalCreateTree"

MsgBox "Impossibile creare le sottocartelle per la GDP. La fase "' & ActiveCell.Value & "' non ha il corrispondente sotto tipo pratica", vbExclamation, TTL_MSGBX

Case "4" 'Subphase without phase

clsTrace.OutputTrace "Cartelle non create. La sottofase "' & ActiveCell.Value & "' non ha la corrispondente fase", 45, "CreateFolder - globalCreateTree"

MsgBox "Impossibile creare le sottocartelle per la GDP. La sottofase "' & ActiveCell.Value & ''' non ha la corrispondente fase", vbExclamation, TTL_MSGBX

End Select

Case Else

clsTrace.OutputTrace "Cartelle non create. Anomalia nella verifica delle sottofasi", 45, "CreateFolder - globalCreateTree"

End Select

Case Else

clsTrace.OutputTrace "Cartelle non create. Anomalia nella verifica delle fasi", 45, "CreateFolder - globalCreateTree"

End Select

Case Else

clsTrace.OutputTrace "Cartelle non create. Anomalia nella verifica dei sottotipi pratica", 45, "CreateFolder - globalCreateTree"

End Select

Case Else

clsTrace.OutputTrace "Cartelle non create. Anomalia nella verifica di tipi pratica", 45, "CreateFolder - globalCreateTree"

End Select

Else

clsTrace.OutputTrace "Cartelle n create. La cella A2 non contiene un valore significativo", 45, "CreateFolder - globalCreateTree"

End If

Case Else 'Error in check length

clsTrace.OutputTrace "Cartelle non create. La descrizione dei livelli non ha la lunghezza corretta", 45, "CreateFolder - globalCreateTree"

End Select

Else

clsTrace.OutputTrace "Cartelle non create. Le intestazioni di colonna sono differenti da quelle richieste", 45, "CreateFolder - globalCreateTree"

End If

Else

clsTrace.OutputTrace "Cartelle non create. L'azione di creazione è stata arrestata", 45, "CreateFolder - globalCreateTree"

MsgBox "La creazione delle cartelle è stata arrestata", vbExclamation, TTL_MSGBX

End If

Else

clsTrace.OutputTrace "Cartelle non create. Cartelle Cliente con troppi caratteri: "' & ArrFolders(UBound(ArrFolders) - 2) & ''''', 45, "CreateFolder - globalCreateTree"

MsgBox "Impossibile creare le sottocartelle per la GDP. II nome della cartella del Cliente "' & ArrFolders(UBound(ArrFolders) - 2) & "' deve essere costituita al massimo da " & MAX_LEN_CODE_CORR & " caratteri", vbExclamation, TTL_MSGBX

End If

Else

clsTrace.OutputTrace "Cartelle non create. II file non si trova nella cartella "' & SubFolder & ""', 45, "CreateFolder - globalCreateTree"

MsgBox "Impossibile creare le sottocartelle per la GDP. II file di MS Excel corrente deve trovarsi nella cartella "' & SubFolder & ''''', vbExclamation, TTL_MSGBX

End If

clsTrace.OutputTrace "Fine creazione cartelle", 0, "CreateFolder - globalCreateTree"

Exit Sub

errGeneric:

g_strErrNum = Err.Number

g_strErrDesc = Err.Description

g_strError = "Anomalia durante la creazione delle cartelle. Numero errore: " & g_strErrNum & " - Descrizione errore: " & g_strErrDesc

clsTrace.OutputTrace g_strError, 65, "CreateFolder - globalCreateTree"

MsgBox g_strError, vbCritical, TTL_MSGBX

End Sub

Note that messages output to the user are in Italian language in the example because the program is intended to be used in Italy, but could be easily translated in other languages.

Part of code number 2: Procedure, in .net Visual Basic language, that creates the database table structure:

' Import levels

' <returns>

' 0: OK

' 1: There are errors

' 2: All levels are not present on the disc

' 3: There are levels that is not possible o delete because contains folders yet

' 4: There isn't pause level

' 5: There are too much pause levels

' </returns>

' <remarks> Author: 1 </remarks>

Friend Function ImportLevels() As Short

Dim nRet As Short

Dim nRowlndex As Integer

Dim nRowlndex1 As Integer

nPrgTypeFolder1 As Integer

Dim nPrgTypeFolder2 As Integer

Dim nPrgTypeFolder3 As Integer

Dim nRowlndex2 As Integer

Dim nRowlndex3 As Integer

Dim nRowlndex4 As Integer

Dim strFolder As String

Dim strMsg As String

Dim strTypeFolder As String

Dim strSubTypeFolder As String

Dim strPhase As String

Dim strSubPhase As String

Dim strSQL As String

Dim nPrgTypeFolder As Integer

Dim Dim nPrgTypeFolder4 As Integer

Dim nPrgSubTypeFolder As Integer

Dim nPrgPhase As Integer

Dim nPrgSubPhase As Integer

Dim strOrd As String

Dim strDescription As String

Dim strDescription1 As String = vbNullString

Dim strDescription2 As String = vbNullString

Dim strDescription3 As String = vbNullString

Dim strDescription4 As String = vbNullString

Dim colLevels2 As Collection

Dim colLevels3 As Collection

Dim colLevels4 As Collection

Dim collndex2 As Collection

Dim collndex3 As Collection

Dim strTemp As String

Dim nPagelndex As Short

Dim blnExistsTypeFolder As Boolean

Dim strKey As String

Dim tmpDsLevel1 As Data.DataSet = Nothing

Dim tmpDsLevel2 As Data.DataSet = Nothing

Dim tmpDsLevel3 As Data.DataSet = Nothing

Dim tmpDsLevel4 As Data.DataSet = Nothing

Dim indLevel1 As Integer = 0

Dim indLevel2 As Integer = 0

Dim indLevel3 As Integer = 0

Dim indLevel4 As Integer = 0

Dim nCountLevelPause As Integer

Dim strMsgDelete1 As String

Dim strMsgDelete2 As String

Try

n Ret = 0

'CHECK THAT ALL FOLDERS EXIST ON THE DISC

Me._NoTypeFolder = 0

Me._NoSubTypeFolder = 0

Me._NoPhase = 0

Me._NoSubPhase = 0

For nPageIndex = 1 To Me._xlsWorkbook.Worksheets.Count Step 1

For nRowIndex = FIRST_ROW To Me._colRowsSheets(nPagelndex) Step 1

Call Me.InitVarFolderForEachRow(nPagelndex, nRowIndex, 1)

'Check if type folder exists on the disc

If Me._TypeFolder <> vbNullString Then

strfolder = Me._PathLevels & "\" & GetNumberLev(Me._NoTypeFolder) & Me.GetLeveIFromCell(Me._TypeFolder, 2)

If My.Computer.FileSystem.DirectoryExists(strFolder) = False Then

n Ret = 2

strMsg = "Nel processo "' & Me._xlsWorkbook.Worksheets(nPagelndex).name & ''', il tipo pratica ''' & strfolder & "' non è presente sul disco."

MessageBox.Show(strMsg & " Effettuare i controlli con il file di MS Excel per l'attivazione", Me._DDDUtility.GetTitleMsgBox, MessageBoxButtons.OK, MessageBoxlcon.Exclamation)

Me._DDDTrace.OutputTrace(strMsg, 45, "ImportLevels clslmport")

Return nRet

Exit Function

End If

End If

'Check if sub type folder exists on the disc

If Me._TypeFolder <> vbNullString And Me._SubTypeFolder <> vbNullString Then

strFolder = Me._PathLevels & "\" & GetNumberLev(Me._NoTypeFolder) & Me.GetLeveIFromCell(Me._TypeFolder, 2) & "\" & GetNumberLev(Me._NoSubTypeFolder) & Me.GetLeveIFromCell(Me._SubTypeFolder, 2)

If My.Computer.FileSystem.DirectoryExists(strFolder) = False Then

n Ret = 2

strMsg = "Nel processo "' & Me._xlsWorkbook.Worksheets(nPagelndex).name & ''', il sottotipo pratica "' & strFolder & "' non è presente sul disco."

MessageBox.Show(strMsg & " Effettuare i controlli con il file di MS Excel per l'attivazione", Me._DDDUtility.GetTitleMsgBox, MessageBoxButtons.OK, MessageBoxlcon.Exclamation)

Me._DDDTrace.OutputTrace(strMsg, 45, "ImportLevels clslmport")

Return nRet

Exit Function

End If

End If

'Check if phase

If Me._TypeFolder <> vbNullString And Me._SubTypeFolder <> vbNullString And Me._Phase <> vbNullString Then

strFolder = Me._PathLevels & "\" & GetNumberLev(Me._NoTypeFolder) & Me.GetLeveIFromCell(Me._TypeFolder, 2) & "\" & GetNumberLev(Me._NoSubTypeFolder) & Me.GetLeveIFromCell(Me._SubTypeFolder, 2) & "\" & GetNumberLev(Me._NoPhase) & Me.GetLeveIFromCell(Me._Phase, 2)

If My.Computer.FileSystem.DirectoryExists(strFolder) = False Then

n Ret = 2

strMsg = "Nel processo "' & Me._xlsWorkbook.Worksheets(nPagelndex).name & "', la fase "' & strFolder & "' non è presente sul disco."

MessageBox.Show(strMsg & " Effettuare i controlli con il file di MS Excel per l'attivazione", Me._DDDUtility. GetTitleMsgBox, MessageBoxButtons.OK, MessageBoxlcon.Exclamation)

Me._DDDTrace.OutputTrace(strMsg, 45, "ImportLevels clslmport")

Return nRet

Exit Function

End If

End If

'Check if sub phase

If Me._TypeFolder <> vbNullString And Me._SubTypeFolder <> vbNullString And Me._Phase <> vbNullString And Me._SubPhase <> vbNullString Then

strFolder = Me._PathLevels & "\" & GetNumberLev(Me._NoTypeFolder) & Me.GetLeveIFromCell(Me._TypeFolder, 2) & "\" & GetNumberLev(Me._NoSubTypeFolder) & Me.GetLeveIFromCell(Me._SubTypeFolder, 2) & "\" & GetNumberLev(Me._NoPhase) & Me.GetLeveIFromCell(Me._Phase, 2) & "\" & GetNumberLev(Me._NoSubPhase) & Me.GetLeveIFromCell(Me._SubPhase, 2)

If My.Computer.FileSystem.DirectoryExists(strFolder) = False Then

n Ret = 2

strMsg = "Nel processo ''' & Me._xlsWorkbook.Worksheets(nPagelndex).name & "', la sottofase ''' & strFolder & ''' non è presente sul disco."

MessageBox.Show(strMsg & " Effettuare i controlli con il file di MS Excel per l'attivazione", Me._DDDUtility.GetTitleMsgBox, MessageBoxButtons.OK, MessageBoxlcon.Exclamation)

Me._DDDTrace.OutputTrace(strMsg, 45, "ImportLevels clslmport")

Return nRet

Exit Function

End If

End If

Next nRowIndex

Next nPageIndex

'DELETE TABLE WITH PERSONAL PROCESS AND PAUSE

strSQL = "DELETE FROM " & Me._DDDData.GetlnitialCatalog & "ABPS"

Me._colQueryFolders.Add(strSQL)

nCountLevelPause = 0

'IMPORT LEVELS IN DATABASE

'Set levels for each row

strTypeFolder = vbNullString

strSubTypeFolder = vbNullString

strPhase = vbNullString

strSubPhase = vbNullString

'Open connection with Database

"Me._DDDData.OpenConnection(Me._DDDUtility.GetKeyConn1)

'Extract new progressive of level

strSQL = "SELECT PRGB FROM " & Me._DDDData.GetlnitialCatalog & "AGPRG"

Me._DDDData.CreateCommand(Me._DDDUtility.GetKeyConn1, strSQL, Me._DDDUtility.GetKeyConn1)

Me._DDDData.ExecuteQuery(Me._DDDUtility.GetKeyConn1, Me._DDDUtility.GetKeyConn1)

'Check if exists number

If Me._DDDData.Fetch(Me._DDDUtility.GetKeyConn1) = True Then

Me._PrgLevel = Me._DDDData.ReplaceNull(Me._DDDUtility.GetKeyConn1, "PRGB", "0")

End If

Me._DDDData.CloseObjectConnection(Me._DDDUtility.GetKeyConn1, Me._DDDUtility.GetKeyConn 1)

Me._NoTypeFolder = 0

Me._NoSubTypeFolder = 0

Me._NoPhase = 0

Me._NoSubPhase = 0

'For each area

For nPageIndex = 1 To Me._xlsWorkbook.Worksheets.Count Step 1

Me.ResetOrderLevels()

'For each row check if new level must be create

For nRowIndex = FIRST_ROW To Me._colRowsSheets(nPagelndex) Step 1

Me.InitVarFolderForEachRow(nPageIndex, nRowIndex, 1)

strTemp = Me._SubPhase

'TYPE FOLDER

If Me._TypeFolder <> vbNullString And Me._TypeFolder <> strTypeFolder Then

'Check if exists in Database

strSQL = "SELECT PRGBF, BD, ORD FROM " & Me._DDDData.GetlnitialCatalog & "ABF WHERE BD = "' & Replace$(GetCryptoFromText(Me._TypeFolder, _En_Tp_Crypto.FirstCrypto), ""', """) & "' AND ACT = 1"

Me._DDDData.CreateCommand(Me._DDDUtility.GetKeyConn1, strSQL, Me._DDDUtility.GetKeyConn1)

Me._DDDData.ExecuteQuery(Me._DDDUtility.GetKeyConn1, Me._DDDUtility.GetKeyConn1)

'Check if exists

If Me._DDDData.Fetch(Me._DDDUtility.GetKeyConn1) = True Then

'Type folder exists in Database

nPrgTypeFolder = Me._DDDData.ReplaceNull(Me._DDDUtility.GetKeyConn1, "PRGBF", "0")

strOrd = Me._DDDData.ReplaceNull(Me._DDDUtility.GetKeyConn1, "ORD", "0")

strDescription = Me._DDDData.ReplaceNull(Me._DDDUtility.GetKeyConn1, "BD", vbNullString)

strDescription = Me.GetDeCryptoFromText(strDescription, _En_Tp_Crypto.FirstCrypto)

'Check if order is changed

If Me._OrdTypeFolder <> strOrd Then

strSQL = "UPDATE " & Me._DDDData.GetlnitialCatalog & "ABF SET ORD = ''' & CStr(Me._OrdTypeFolder) & "', ORDCR = "' & Me.GetCryptoFromText(CStr(Me._OrdTypeFolder), _En_Tp_Crypto.FirstCrypto) & "' WHERE PRGBF = " & nPrgTypeFolder

'Add query to collection

Me._colQueryFolders.Add(strSQL)

End If

'Check if description is changed

strTemp = Trim$(Me._xlsWorkbook.Worksheets(nPageIndex).Range(LEVELS_COL_ A & nRowlndex).Value)

strTemp = Me.GetLevelFromCell(strTemp, 2)

If strTemp <> Me._TypeFolder Then

strSQL = "UPDATE " & Me._DDDData.GetInitialCatalog & "ABF SET BD = "' & Replace$(Me.GetCryptoFromText(strTemp, _En_Tp_Crypto.FirstCrypto), ""', """) & ''', BDCR = ''' & Replace$(Me.GetCryptoFromText(strTemp, _En_Tp_Crypto.SecondCrypto), ''''', '''''') & ''' WHERE PRGBF = " & nPrgTypeFolder

'Add query to collection

Me._colQueryFolders.Add(strSQL)

End If

Else

'Type folder NOT exists in Database

'Create type folder

'New progressive

Me._PrgLevel = Me._PrgLevel + 1

nPrgTypeFolder = Me._PrgLevel

'Insert new level in Database

strSQL = "INSERT INTO " & Me._DDDData.GetlnitialCatalog & "ABF (PRGBF, BD, BDCR, ACT, ORD, ORDCR, PRGAR, DCRT, HCRT, DDSB, HDSB) VALUES(" & _

nPrgTypeFolder & ", "' & Replace$(Me.GetCryptoFromText(Me._TypeFolder, _En_Tp_Crypto.FirstCrypto), ""', """) & "', "' & Replace$(Me.GetCryptoFromText(Me._TypeFolder, _En_Tp_Crypto.SecondCrypto), ""', """) & "', 1, "' & _

Me._OrdTypeFolder & '",'" & Me.GetCryptoFromText(Me._OrdTypeFolder, _En_Tp_Crypto.FirstCrypto) & '''," " & nPageIndex & ", " & Format$(Now.Year, "0000") & Format$(Now.Month, "00") & Format$(Now.Day, "00") & ", " & _ Format$(Now.Hour, "00") & Format$(Now.Minute, "00") & Format$(Now.Second, "00") & ", 0, 0)"

'Add query to collection

Me._colQueryFolders.Add(strSQL)

End If

'Check for pause

If Me._xlsWorkbook.Worksheets(nPagelndex).range(LEVELS_COL_A & nRowlndex).Interior.Colorlndex = BACKCOLOR_CELL_PAUSE Then

Me.SetPause(nPrgTypeFolder, _En_Tp_Level.TypeFolder)

nCountLevelPause += 1

End If

Me._DDDData.CloseObjectConnection(Me._DDDUtility.GetKeyConn1, Me._DDDUtility.GetKeyConn1)

'Create key to retrieve progressive level from collection

strKey = nPageIndex & "-" & nRowIndex & "-" & "1"

Me._colProgressiveLevels.Add(nPrgTypeFolder, strKey)

'Assign new type folder

strTypeFolder = Me._TypeFolder

strSubTypeFolder = vbNullString

strPhase = vbNullString

strSubPhase = vbNullString

End If

'SUB TYPE FOLDER

If Me._SubTypeFolder <> vbNullString And Me._SubTypeFolder <> strSubTypeFolder Then

'Check if exists in Database

strSQL = "SELECT PRGBS, BD, ORD FROM " & Me._DDDData.GetlnitialCatalog & "ABS WHERE BD = "' & Replace$(GetCryptoFromText(Me._SubTypeFolder, _En_Tp_Crypto.FirstCrypto), ''''', '''''') & "' AND PRGBF = " & nPrgTypeFolder & " AND ACT = 1" Me._DDDData.CreateCommand(Me._DDDUtility.GetKeyConn1, strSQL, Me._DDDUtility.GetKeyConn1)

Me._DDDData.ExecuteQuery(Me._DDDUtility.GetKeyConn1, Me._DDDUtility.GetKeyConn1)

'Check if exists

If Me._DDDData.Fetch(Me._DDDUtility.GetKeyConn1) = True Then

'Sub type folder exists in Database

nPrgSubTypeFolder = Me._DDDData.ReplaceNull(Me._DDDUtility.GetKeyConn1, "PRGBS", "0")

strOrd = Me._DDDData.ReplaceNull(Me._DDDUtility.GetKeyConn1, "ORD", "0")

strDescription = Me._DDDData.ReplaceNull(Me._DDDUtility.GetKeyConn1, "BD", vbNullString)

strDescription = Me.GetDeCryptoFromText(strDescription, _En_Tp_Crypto.FirstCrypto)

'Check if order is changed

If Me._OrdSubTypeFolder <> strOrd Then

strSQL = "UPDATE " & Me._DDDData.GetlnitialCatalog & "ABS SET ORD = ''' & CStr(Me._OrdSubTypeFolder) & "', ORDCR = "' & Me.GetCryptoFromText(CStr(Me._OrdSubTypeFolder), _En_Tp_Crypto.FirstCrypto) & "' WHERE PRGBF = " & nPrgTypeFolder & " AND PRGBS = " & nPrgSubTypeFolder

'Add query to collection

Me._colQueryFolders.Add(strSQL)

End If

'Check if description is changed

strTemp = Trim$(Me._xlsWorkbook.Worksheets(nPagelndex).Range(LEVELS_COL_ B & nRowlndex).Value)

strTemp = Me.GetLeveIFromCell(strTemp, 2)

If strTemp <> Me._SubTypeFolder Then

strSQL = "UPDATE " & Me._DDDData.GetlnitialCatalog & "ABS SET BD = "' & Replace$(Me.GetCryptoFromText(strTemp, _En_Tp_Crypto.FirstCrypto), ""', """) & "', BDCR = "' & Replace$(Me.GetCryptoFromText(strTemp, _En_Tp_Crypto.SecondCrypto), ""', """) & "' WHERE PRGBF = " & nPrgTypeFolder & " AND PRGBS = " & nPrgSubTypeFolder

'Add query to collection

Me._colQueryFolders.Add(strSQL)

End If

Else

'Sub type folder NOT exists in Database

'Create sub type folder

'New progressive

Me._PrgLevel = Me._PrgLevel + 1

nPrgSubTypeFolder = Me._PrgLevel

'Insert new level in Database

strSQL = "INSERT INTO " & Me._DDDData.GetlnitialCatalog & "ABS (PRGBF, PRGBS, BD, BDCR, ACT, ORD, ORDCR, DCRT, HCRT, DDSB, HDSB) VALUES(" & _

nPrgTypeFolder & ", " & nPrgSubTypeFolder & ", "' & Replace$(Me.GetCryptoFromText(Me._SubTypeFolder, _En_Tp_Crypto.FirstCrypto), ""', """) & "', "' & Replace$(Me.GetCryptoFromText(Me._SubTypeFolder, _En_Tp_Crypto.SecondCrypto), ""', """) & "', 1, "' & _

Me._OrdSubTypeFolder & "', "' & Me.GetCryptoFromText(Me._OrdSubTypeFolder, _En_Tp_Crypto.FirstCrypto) & '''," " & Format$(Now.Year, "0000") & Format$(Now.Month, "00") & Format$(Now.Day, "00") & ", " & _

Format$(Now.Hour, "00") & Format$(Now.Minute, "00") & Format$(Now.Second, "00") & ", 0, 0)"

'Add query to collection

Me._colQueryFolders.Add(strSQL)

End If

'Check for pause

If Me._xlsWorkbook.Worksheets(nPagelndex).range(LEVELS_COL_B & nRowlndex).Interior.Colorlndex = BACKCOLOR_CELL_PAUSE Then

Me.SetPause(nPrgSubTypeFolder, _En_Tp_Level.SubTypeFolder)

nCountLevelPause += 1

End If

Me._DDDData.CloseObjectConnection(Me._DDDUtility.GetKeyConn1, Me._DDDUtility.GetKeyConn1)

'Create key to retrieve progressive level from collection

strKey = nPageIndex & "-" & nRowIndex & "-" & "2"

Me._colProgressiveLevels.Add(nPrgSubTypeFolder, strKey)

' Assign new type folder

strSubTypeFolder = Me._SubTypeFolder

strPhase = vbNullString

strSubPhase = vbNullString

End If

'PHASE

If Me._Phase <> vbNullString And Me._Phase <> strPhase Then

'Check if exists in Database

strSQL = "SELECT PRGBT, BD, ORD FROM " & Me._DDDData.GetInitialCatalog & "ABT WHERE BD = ''' & Replace$(GetCryptoFromText(Me._Phase, _En_Tp_Crypto.FirstCrypto), ""', """) & "' AND PRGBF = " & nPrgTypeFolder & " AND PRGBS = " & nPrgSubTypeFolder & " AND ACT = 1"

Me._DDDData.CreateCommand(Me._DDDUtility.GetKeyConn1, strSQL, Me._DDDUtility.GetKeyConn1)

Me._DDDData.ExecuteQuery(Me._DDDUtility.GetKeyConn1, Me._DDDUtility.GetKeyConn1)

'Check if exists

If Me._DDDData.Fetch(Me._DDDUtility.GetKeyConn1) = True Then

'Phase exists in Database

nPrgPhase = Me._DDDData.ReplaceNull(Me._DDDUtility.GetKeyConn1, "PRGBT", "0")

strOrd = Me._DDDData.ReplaceNull(Me._DDDUtility.GetKeyConn1, "ORD", "0")

strDescription = Me._DDDData.ReplaceNull(Me._DDDUtility.GetKeyConn1, "BD", vbNullString)

strDescription = Me.GetDeCryptoFromText(strDescription, _En_Tp_Crypto.FirstCrypto)

'Check if order is changed

If Me._OrdPhase <> strOrd Then

strSQL = "UPDATE " & Me._DDDData.GetlnitialCatalog & "ABT SET ORD = "' & CStr(Me._OrdPhase) & "', ORDCR = "' & Me.GetCryptoFromText(CStr(Me._OrdPhase), _En_Tp_Crypto.FirstCrypto) & ''' WHERE PRGBF = " & nPrgTypeFolder & " AND PRGBS = " & nPrgSubTypeFolder & " AND PRGBT = " & nPrgPhase

'Add query to collection

Me._colQueryFolders.Add(strSQL)

End If

'Check if description is changed

strTemp = Trim$(Me._xlsWorkbook.Worksheets(nPagelndex).Range(LEVELS_COL_ C & nRowlndex).Value)

strTemp = Me.GetLevelFromCell(strTemp, 2)

If strTemp <> Me._Phase Then

strSQL = "UPDATE " & Me._DDDData.GetlnitialCatalog & "ABT SET BD = ''' & Replace$(Me.GetCryptoFromText(strTemp, _En_Tp_Crypto.FirstCrypto), ""', """) & "', BDCR = "' & Replace$(Me.GetCryptoFromText(strTemp, _En_Tp_Crypto.SecondCrypto), ""', """) & "' WHERE PRGBF = " & nPrgTypeFolder & " AND PRGBS = " & nPrgSubTypeFolder & " AND PRGBT = " & nPrgPhase

'Add query to collection

Me._colQueryFolders.Add(strSQL)

End If

Else

'Phase NOT exists in Database

'Create phase

'New progressive

Me._PrgLevel = Me._PrgLevel + 1

nPrgPhase = Me._PrgLevel

'Insert new level in Database

strSQL = "INSERT INTO " & Me._DDDData.GetlnitialCatalog & "ABT (PRGBF, PRGBS, PRGBT, BD, BDCR, ACT, ORD, ORDCR, DCRT, HCRT, DDSB, HDSB) VALUES(" & _

nPrgTypeFolder & ", " & nPrgSubTypeFolder & ", " & nPrgPhase & ", "' & Replace$(Me.GetCryptoFromText(Me._Phase, _En_Tp_Crypto.FirstCrypto), ""', """) & "', "' & Replace$(Me.GetCryptoFromText(Me._Phase, _En_Tp_Crypto.SecondCrypto), ""', """) & ''', 1, ''' & _

Me._OrdPhase & ''', ''' & Me.GetCryptoFromText(Me._OrdPhase, _En_Tp_Crypto.FirstCrypto) & "', " & Format$(Now.Year, "0000") & Format$(Now.Month, "00") & Format$(Now.Day, "00") & ", " &_Format$(Now.Hour, "00") & Format$(Now.Minute, "00") & Format$(Now.Second, "00") & ", 0, 0)"

'Add query to collection

Me._colQueryFolders.Add(strSQL)

End If

'Check for pause

If Me._xlsWorkbook.Worksheets(nPagelndex).range(LEVELS_COL_C & nRowlndex).Interior.Colorlndex = BACKCOLOR_CELL_PAUSE Then

Me.SetPause(nPrgPhase, _En_Tp_Level.Phase)

nCountLevelPause += 1

End If

Me._DDDData.CloseObjectConnection(Me._DDDUtility.GetKeyConn1, Me._DDDUtility.GetKeyConn1)

'Create key to retrieve progressive level from collection

strKey = nPageIndex & "-" & nRowIndex & "-" & "3"

If strKey = "11-13-3" Then

strKey = strKey

End If

Me._colProgressiveLevels.Add(nPrgPhase, strKey)

'Assign new phase

strPhase = Me._Phase

strSubPhase = vbNullString

End If

'SUB PHASE

If Me._SubPhase <> vbNullString And Me._SubPhase <> strSubPhase Then

'Check if exists in Database

strSQL = "SELECT PRGBFH, BD, ORD FROM " & Me._DDDData.GetlnitialCatalog & "ABFH WHERE BD = "' & Replace$(GetCryptoFromText(Me._SubPhase, _En_Tp_Crypto.FirstCrypto), ""', """) & "' AND PRGBF = " & nPrgTypeFolder & " AND PRGBS = " & nPrgSubTypeFolder & " AND PRGBT = " & nPrgPhase & " AND ACT = 1"

Me._DDDData.CreateCommand(Me._DDDUtility.GetKeyConn1, strSQL, Me._DDDUtility.GetKeyConn1)

Me._DDDData.ExecuteQuery(Me._DDDUtility.GetKeyConn1, Me._DDDUtility.GetKeyConn1)

'Check if exists

If Me._DDDData.Fetch(Me._DDDUtility.GetKeyConn1) = True Then

'Sub phase exists in Database

nPrgSubPhase = Me._DDDData.ReplaceNull(Me._DDDUtility.GetKeyConn1, "PRGBFH", "0")

strOrd = Me._DDDData.ReplaceNull(Me._DDDUtility.GetKeyConn1, "ORD", "0")

strDescription = Me._DDDData.ReplaceNull(Me._DDDUtility.GetKeyConn1, "BD", vbNullString)

strDescription = Me.GetDeCryptoFromText(strDescription, _En_Tp_Crypto.FirstCrypto)

'Check if order is changed

If Me._OrdSubPhase <> strOrd Then

strSQL = "UPDATE " & Me._DDDData.Getlnitialcatalog & "ABFH SET ORD = " & CStr(Me._OrdSubPhase) & ", ORDCR = "' & Me.GetCryptoFromText(CStr(Me._OrdSubPhase), _En_Tp_Crypto.FirstCrypto) & "' WHERE PRGBF = " & nPrgTypeFolder & " AND PRGBS = " & nPrgSubTypeFolder & " AND PRGBT = " & nPrgPhase & " AND PRGBFH = " & nPrgSubPhase

'Add query to collection

Me._colQueryFolders.Add(strSQL)

End If

'Check if description is changed

strTemp = Trim$(Me._xlsWorkbook.Worksheets(nPagelndex).Range(LEVELS_COL_ D & nRowlndex).Value)

strTemp = Me.GetLeveIFromCell(strTemp, 2)

If strTemp <> Me._SubPhase Then

strSQL = "UPDATE " & Me._DDDData.GetlnitialCatalog & "ABFH SET BD = ''' & Replace$(Me.GetCryptoFromText(strTemp, _En_Tp_Crypto.FirstCrypto), ""', """) & ''', BDCR = "' & Replace$(Me.GetCryptoFromText(strTemp, _En_Tp_Crypto.SecondCrypto), ""', """) & "' WHERE PRGBF = " & nPrgTypeFolder & " AND PRGBS = " & nPrgSubTypeFolder & " AND PRGBT = " & nPrgPhase & " AND PRGBFH = " & nPrgSubPhase

'Add query to collection

Me._colQueryFolders.Add(strSQL)

End If

Else

'Sub phase NOT exists in Database

'Create sub phase

'New progressive

Me._PrgLevel = Me._PrgLevel + 1

nPrgSubPhase = Me._PrgLevel

'Insert new level in Database

strSQL = "INSERT INTO " & Me._DDDData.GetlnitialCatalog & "ABFH (PRGBF, PRGBS, PRGBT, PRGBFH, BD, BDCR, ACT, ORD, ORDCR, DCRT, HCRT, DDSB, HDSB) VALUES(" & _

nPrgTypeFolder & ", " & nPrgSubTypeFolder & ", " & nPrgPhase & ", " & nPrgSubPhase & ", "' & Replace$(Me.GetCryptoFromText(Me._SubPhase, _En_Tp_Crypto.FirstCrypto), ""', """) & "', "' & Replace$(Me.GetCryptoFromText(Me._SubPhase, _En_Tp_Crypto.SecondCrypto), ''''', '''''') & "', 1, "' & _

Me._OrdSubPhase & "', "' & Me.GetCryptoFromText(Me._OrdSubPhase, _En_Tp_Crypto.FirstCrypto) & ''', " & Format$(Now.Year, "0000") & Format$(Now.Month, "00") & Format$(Now.Day, "00") & ", " & _

Format$(Now.Hour, "00") & Format$(Now.Minute, "00") & Format$(Now.Second, "00") & ", 0, 0)"

'Add query to collection

Me._colQueryFolders.Add(strSQL)

End If

'Check for pause

If Me._xlsWorkbook.Worksheets(nPagelndex).range(LEVELS_COL_D & nRowlndex).Interior.Colorlndex = BACKCOLOR_CELL_PAUSE Then

Me.SetPause(nPrgSubPhase, _En_Tp_Level.SubPhase)

nCountLevelPause += 1

End If

Me._DDDData.CloseObjectConnection(Me._DDDUtility.GetKeyConn1, Me._DDDUtility.GetKeyConn1)

'Create key to retrieve progressive level from collection

strKey = nPageIndex & "-" & nRowIndex & "-" & "4"

Me._colProgressiveLevels.Add(nPrgSubPhase, strKey)

'Assign new sub phase

strSubPhase = Me._SubPhase

End If

Next nRowIndex

Next nPageIndex

Me._DDDData.CloseObjectConnection(Me._DDDUtility.GetKeyConn1, Me._DDDUtility.GetKeyConn1)

Try

'SET INVISIBLE LEVELS PRESENT IN DATABASE BUT NO IN MS EXCEL FILE

colLevels2 = New Collection

colLevels3 = New Collection

colLevels4 = New Collection

colIndex2 = New Collection

colIndex3 = New Collection

strSQL = "SELECT PRGBF, BD FROM " & Me._DDDData.GetInitialCatalog & "ABF WHERE ACT = 1 ORDER BY PRGBF, ORD"

Me._DDDData.CreateCommand(Me._DDDUtility.GetKeyConn1, strSQL, Me._DDDUtility.GetKeyConn1)

Me._DDDData.CreateDataAdapter(strSQL, Me._DDDUtility.GetKeyConn1, Me._DDDUtility.GetKeyConn1, Me._DDDUtility.GetKeyConn1)

tmpDsLevel1 = Me._DDDData.CreateDataSet(Me._DDDUtility.GetKeyConn1)

Me._DDDData.FillDataSet(Me._DDDUtility.GetKeyConn1, Me._DDDUtility.GetKeyConn1, "tab")

Me._DDDData.CloseObjectConnection(, Me._DDDUtility.GetKeyConn1,,, , Me._DDDUtility.GetKeyConn1)

For indLevel1 = 0 To tmpDsLevel1.Tables("tab").Rows.Count - 1 Step 1

With (tmpDsLevel1.Tables("tab").Rows(indLevel1))

nPrgTypeFolder1 = .Item("PRGBF")

strDescription1 = Me.GetDeCryptoFromText(.Item("BD"), _En_Tp_Crypto.FirstCrypto)

End With

'Check if level 1 exists in MS Excel Sheet

blnExistsTypeFolder = False

Me._NoTypeFolder = 0

Me._NoSubTypeFolder = 0

Me._NoPhase = 0

Me._NoSubPhase = 0

For nPageIndex = 1 To Me._xlsWorkbook.Worksheets.Count Step 1

For nRowIndex1 = FIRST_ROW To Me._colRowsSheets(nPageIndex) Step 1

Call Me.InitVarFolderForEachRow(nPageIndex, nRowIdex1, 1)

If UCase$(Me._TypeFolder) = UCase$(strDescription1) Then

blnExistsTypeFolder = True

Exit For

End If

Next nRowIndex1

If blnExistsTypeFolder = True Then

Exit For

End If

Next nPageIndex

'Check if level exists

strMsgDelete1 = "L'attivazione della GDP viene interrotta. Si sta cercando di eliminare il livello"

strMsgDelete2 = "che contiene ancora delle Pratiche o dei Documenti. Prima di passare all'eliminazione del livello, spostare prima le Pratiche o i Documenti che contiene in un altro livello"

If blnExistsTypeFolder = False Then

'Check if in type folder or contents levels exists folders

If Me.CanDeleteNoFolderDocumentExists(nPrgTypeFolder1, _En_Tp_Level.TypeFolder) = False Then

nRet = 3

MessageBox.Show(strMsgDelete1 & '' ''' & _

strDescription1 & ''' '' & strMsgDelete2, _

Me._DDDUtility.GetTitleMsgBox, MessageBoxButtons.OK, MessageBoxIcon. Error)

Exit Try

End If

'Level not exists in MS Excel sheet

strFolder = Me._PathLevels & "\" & Me.GetNumberLev(Me._NoTypeFolder) & strDescription1

If My.Computer.FileSystem.DirectoryExists(strFolder) = True Then

Me._colDeleteFoldersTransaction.Add(strFolder)

End If

'Add query to collection

Me.SetInvisible(Me._colQueryFolders, nPrgTypeFolder1, _En_Tp_Level.TypeFolder)

Else

colLevels2.Clear()

colIndex2.Clear()

'Level 1 exists; then check if type folder have sub types folders from Database in MS Excel

'Search sub type folders

For nRowIndex2 = nRowIndex1 To Me._colRowsSheets(nPageIndex) Step 1

'Check if type folder is current type folder

strTemp = UCase$(Trim$(Me._xlsWorkbook.Worksheets(nPageIndex).Range(LEVEL S_COL_A & nRowIndex2).Value))

If strTemp = vbNullString Or strTemp = UCase$(Trim$(strDescription1)) Then

'Check if exists sub type folder

strTemp = UCase$(Trim$(Me._xlsWorkbook.Worksheets(nPageIndex).Range(LEVEL S_COL_B & nRowIndex2).Value))

strTemp = GetLevelFromCell(strTemp, 1)

If strTemp <> vbNullString Then

colLevels2.Add(strTemp)

colIndex2.Add(nRowIndex2)

End If

Else

Exit For

End If

Next nRowIndex2

'Check if there are sub type folders

If colLevels2.Count > 0 Then

'Extract Sub type folders from Database

strSQL = "SELECT PRGBS, BD FROM " & Me._DDDData.GetInitialCatalog & "ABS WHERE ACT = 1 AND PRGBF = " & nPrgTypeFolder1 & " ORDER BY PRGBF, PRGBS, ORD"

Me._DDDData.CreateCommand(Me._DDDUtility.GetKeyConn1, strSQL, Me._DDDUtility.GetKeyConn1)

Me._DDDData.CreateDataAdapter(strSQL, Me._DDDUtility.GetKeyConn1, Me._DDDUtility.GetKeyConn1, Me._DDDUtility.GetKeyConn1)

tmpDsLevel2 = Me._DDDData.CreateDataSet(Me._DDDUtility.GetKeyConn2)

Me._DDDData.FillDataSet(Me._DDDUtility.GetKeyConn1, Me._DDDUtility.GetKeyConn2, "tab")

Me._DDDData.CloseObjectConnection(, Me._DDDUtility.GetKeyConn1,,, , Me._DDDUtility.GetKeyConn1)

For indLevel2 = 0 To tmpDsLevel2.Tables("tab").Rows.Count - 1 Step 1

With (tmpDsLevel2.Tables("tab").Rows(indLevel2))

nPrgTypeFolder2 = .Item("PRGBS")

strDescription2 = Me.GetDeCryptoFromText(.Item("BD"), _En_Tp_Crypto.FirstCrypto)

End With

For nRowIndex2 = 1 To colLevels2.Count Step 1

If UCase$(Trim$(strDescription2)) = colLevels2(nRowIndex2) Then

Exit For

End If

Next nRowIndex2

If nRowI= colLevels2.Count + 1 Then

'Check if in subtype folder or contents levels exists folders

If Me.CanDeleteNoFolderDocumentExists(nPrgTypeFolder2, _En_Tp_Level.SubTypeFolder) = False Then

nRet = 3

MessageBox.Show(strMsgDelete1 & '' ''' & _

strDescription1 & "-" & strDescription2 & ''' '' & strMsgDelete2, _

Me._DDDUtility.GetTitleMsgBox, MessageBoxButtons.OK, MessageBoxIcon. Error)

Exit Try

End If

'Sub type folder is in Database but not in MS Excel sheet

strFolder = Me._PathLevels & "\" & Me.GetNumberLev(Me._NoTypeFolder) & strDescription1 & "\" & Me.GetNumberLev(nRowIndex2) & strDescription2

If My.Computer.FileSystem.DirectoryExists(strFolder) = True Then

Me._colDeleteFoldersTransaction.Add(strFolder)

End If

'Add query to collection

Me.SetInvisible(Me._colQueryFolders, nPrgTypeFolder2, _En_Tp_Level.SubTypeFolder)

Else

colLevels3.Clear()

colIndex3.Clear()

'Level 2 exists; then check if sub type folder have phases from Database in MS Excel

'Search phases

For nRowIndex3 = colIndex2(nRowIndex2) To Me.-colRowsSheets(nPageIndex) Step 1

'Check if phase is current sub type folder

strTemp = UCase$(Trim$(Me._xlsWorkbook.Worksheets(nPageIndex).Range(LEVEL S_COL_B & nRowIndex3).Value))

If strTemp = vbNullString Or strTemp = UCase$(Trim$(strDescription2)) Then

'Check if exists phase

strTemp = UCase$(Trim$(Me._xlsWorkbook.Worksheets(nPageIndex).Range(LEVEL S_COL_C & nRowIndex3).Value))

strTemp = GetLevelFromCell(strTemp, 1)

If strTemp <> vbNullString Then

colLevels3.Add(strTemp)

colIndex3.Add(nRowIndex3)

End If

Else

Exit For

End If

Next nRowIndex3

'Check if there are phases

If colLevels3.Count > 0 Then

'Extract phases from Database

strSQL = "SELECT PRGBT, BD FROM " & Me._DDDData.GetInitialCatalog & "ABT WHERE ACT = 1 AND PRGBS = " & nPrgTypeFolder2 & " ORDER BY PRGBF, PRGBS, PRGBT, ORD"

Me._DDDData.CreateCommand(Me._DDDUtility.GetKeyConn1, strSQL, Me._DDDUtility.GetKeyConn1)

Me._DDDData.CreateDataAdapter(strSQL, Me._DDDUtility.GetKeyConn1, Me._DDDUtility.GetKeyConn1, Me._DDDUtility.GetKeyConn1)

tmpDsLevel3 = Me._DDDData.CreateDataSet(Me._DDDUtility.GetKeyConn3)

Me._DDDData.FillDataSet(Me._DDDUtility.GetKeyConn1, Me._DDDUtility.GetKeyConn3, "tab")

Me._DDDData.CloseObjectConnection(, Me._DDDUtility.GetKeyConn1,,, , Me._DDDUtility.GetKeyConn1)

For indLevel3 = 0 To tmpDsLevel3.Tables("tab").Rows.Count - 1 Step 1

With (tmpDsLevel3.Tables("tab").Rows(indLevel3))

nPrgTypeFolder3 = .Item("PRGBT")

strDescription3 = Me.GetDeCryptoFromText(.Item("BD"), _En_Tp_Crypto.FirstCrypto)

End With

For nRowIndex3 = 1 To colLevels3.Count Step 1

If UCase$(Trim$(strDescription3)) = colLevels3(nRowIndex3) Then

Exit For

End If

Next nRowIndex3

If nRowIndex3 = colLevels3.Count + 1 Then

'Check if in phase or contents levels exists folders

If Me.CanDeleteNoFolderDocumentExists(nPrgTypeFolder3, _En_Tp_Level.Phase) = False Then

nRet = 3

MessageBox.Show(strMsgDelete1 & '' ''' & _

strDescription1 & "-" & strDescription2 & "-" & strDescription3 & ''' '' & strMsgDelete2, _

Me._DDDUtility.GetTitleMsgBox, MessageBoxButtons.OK, MessageBoxIcon.Error)

Exit Try

End If

'Phase is in Database but not in MS Excel sheet

strFolder = Me._PathLevels & "\" & Me.GetNumberLev(Me._NoTypeFolder) & strDescription1 & "\" & Me.GetNumberLev(nRowIndex2) & strDescription2 & "\" & Me.GetNumberLev(nRowIndex3) & strDescription3

If My.Computer.FileSystem.DirectoryExists(strFolder) = True Then

Me._colDeleteFoldersTransaction.Add(strFolder)

End If

'Add query to collection

Me.SetInvisible(Me._colQueryFolders, nPrgTypeFolder3, _En_Tp_Level.Phase)

Else

colLevels4.Clear()

'Level 3 exists; then check if phase have sub phases from Database in MS Excel

'Search sub phases

For nRowIndex4 = colIndex3(nRowIndex3) To Me._colRowsSheets(nPageIndex) Step 1

'Check if phase is current sub phases

strTemp = UCase$(Trim$(Me._xlsWorkbook.Worksheets(nPageIndex).Range(LEVEL S_COL_C & nRowIndex4).Value))

If strTemp = vbNullString Or strTemp = UCase$(Trim$(strDescription3)) Then

'Check if exists sub phase

strTemp = UCase$(Trim$(Me._xlsWorkbook.Worksheets(nPageIndex).Range(LEVEL S_COL_D & nRowIndex4).Value))

strTemp = GetLevelFromCell(strTemp, 1)

If strTemp <> vbNullString Then

colLevels4.Add(strTemp)

End If

Else

Exit For

End If

Next nRowIndex4

'Check if there are sub phases

If colLevels4.Count > 0 Then

'Extract phases from Database

strSQL = "SELECT PRGBFH, BD FROM " & Me._DDDData.GetInitialCatalog & "ABFH WHERE ACT = 1 AND PRGBT = " & nPrgTypeFolder3 & " ORDER BY PRGBF, PRGBS, PRGBT, PRGBFH, ORD"

Me._DDDData.CreateCommand(Me._DDDUtility.GetKeyConn1, strSQL, Me._DDDUtility.GetKeyConn1)

Me._DDDData.CreateDataAdapter(strSQL, Me._DDDUtility.GetKeyConn1, Me._DDDUtility.GetKeyConn1, Me._DDDUtility.GetKeyConn1)

tmpDsLevel4 = Me._DDDData.CreateDataSet(Me._DDDUtility.GetKeyConn4)

Me._DDDData.FillDataSet(Me._DDDUtility.GetKeyConn1, Me._DDDUtility.GetKeyConn4, "tab")

Me._DDDData.CloseObjectConnection(, Me._DDDUtility.GetKeyConn1,,, , Me._DDDUtility.GetKeyConn1)

For indLevel4 = 0 To tmpDsLevel4.Tables("tab").Rows.Count - 1 Step 1

With (tmpDsLevel4.Tables("tab").Rows(indLevel4))

nPrgTypeFolder4 = .Item("PRGBFH")

strDescription4 = Me.GetDeCryptoFromText(.Item("BD"), _En_Tp_Crypto.FirstCrypto)

End With

For nRowIndex4 = 1 To colLevels4.Count Step 1

If UCase$(Trim$(strDescription4)) = colLevels4(nRowIndex4) Then

Exit For

End If

Next nRowIndex4

If nRowIndex4 = colLevels4.Count + 1 Then

'Check if in phase or contents levels exists folders

If Me.CanDeleteNoFolderDocumentExists(nPrgTypeFolder4, _En_Tp_Level.SubPhase) = False Then

nRet = 3

MessageBox.Show(strMsgDelete1 & '' ''' & _

strDescription1 & "-" & strDescription2 & "-" & strDescription3 & "-" & strDescription4 & ''' '' & strMsgDelete2, _

Me._DDDUtility.GetTitleMsgBox, MessageBoxButtons.OK, MessageBoxlcon. Error)

Exit Try

End If

'Sub phase is in Database but not in MS Excel sheet

strFolder = Me._PathLevels & "\" & Me.GetNumberLev(Me._NoTypeFolder) & strDescription1 & "\" & Me.GetNumberLev(nRowIndex2) & strDescription2 & "\" & Me.GetNumberLev(nRowIndex3) & strDescription3 & "\" & Me.GetNumberLev(nRowIndex4) & strDescription4

If My.Computer.FileSystem.DirectoryExists(strFolder) = True Then

Me._colDeleteFoldersTransaction.Add(strFolder)

End If

'Add query to collection

Me.SetInvisible(Me._colQueryFolders, nPrgTypeFolder4, _En_Tp_Level.SubPhase)

End If

Next indLevel4

Me._DDDData.CloseObjectConnection(,,,,,, Me._DDDUtility.GetKeyConn4)

End If

End If

colLevels4.Clear()

Next indLevel3

Me._DDDData.CloseObjectConnection(,,,,,, Me._DDDUtility.GetKeyConn3)

End If

colLevels3.Clear()

colIndex3.Clear()

End If

Next indLevel2

Me._DDDData.CloseObjectConnection(,,,,,, Me._DDDUtility.GetKeyConn2)

End If

colLevels2.Clear()

colIndex2.Clear()

End If

Next indLevel1

Me._DDDData.CloseObjectConnection(,,,,,, Me._DDDUtility.GetKeyConn1)

Catch ex As Exception

n Ret = 1

Me._DDDTrace.OutputTrace("Errore durante la verifica dei livelli da eliminare. Descrizione errore: " & ex.Message, 65, "ImportLevels clsImport")

System.Windows.Forms.MessageBox.Show(Me._DDDUtility.GetMsgErr(" Anomalia", ex.Message, "Consultare le tracce diagnostiche"), Me._DDDUtility.GetTitleMsgBox, Windows. Forms. MessageBoxButtons.OK, Windows.Forms.MessageBoxIcon.Error)

End Try

'MANAGE AREAS

If nRet = 0 Then

'Write command to delete table ABARO

Me._colQueryFolders.Add("DELETE FROM " & Me._DDDData.GetInitialCatalog & "ABARO")

For nPageIndex = 1 To Me._xlsWorkbook.Worksheets.Count Step 1

strSQL = "INSERT INTO " & Me._DDDData.GetInitialCatalog & "ABARO (IND, AR, ARCR) VALUES(" & nPageIndex & '',''' & Replace$(Me.GetCryptoFromText(Trim$(Me._xlsWorkbook.Worksheets(n PageIndex).name), _En_Tp_Crypto.FirstCrypto), ''''','''''') & ''',''' & Replace$(Me.GetCryptoFromText(Trim$(Me._xlsWorkbook.Worksheets(n PageI).name), _En_Tp_Crypto.SecondCrypto), ''''','''''') & ''')''

Me.-colQueryFolders.Add(strSQL)

Next nPageIndex

'Write command to update index of area for each types folder

For nPageIndex = 1 To Me._xlsWorkbook.Worksheets.Count Step 1

For nRowIndex = FIRST_ROW To Me._colRowsSheets(nPageIndex) Step 1

strTemp = Trim$(Me._xlsWorkbook.Worksheets(nPageIndex).range(LEVELS_COL_A & nRowIndex).Value)

If strTemp <> vbNullString Then

strTemp = Me.GetLevelFromCell(strTemp, 2)

strSQL = "UPDATE " & Me._DDDData.GetInitialCatalog & "ABF SET PRGAR = " & nPageIndex & " WHERE BD =''' & Replace$(Me.GetCryptoFromText(strTemp, _En_Tp_Crypto.FirstCrypto), '''''','''''') & ''' AND ACT = 1"

Me._colQueryFolders.Add(strSQL)

End If

Next nRowIndex

Next nPageIndex

End If

'CHECK PAUSE

If nCountLevelPause = 1 Then

'OK - There is only one level for pause

Elself nCountLevelPause = 0 Then

'There isn't pause level

nRet = 4

Me._DDDTrace.OutputTrace("L'attivazione viene interrotta perchè non esistono livelli Pausa", 45, "ImportLevels clsImport")

System.Windows.Forms.MessageBox.Show("L'attivazione non può essere eseguita perchè non è stato trovato nessun livello'Pausa' per l'attivazione corrente. Rivedere il documento di MS Excel di analisi e impostare il livello 'Pausa''', Me._DDDUtility.GetTitleMsgBox, MessageBoxButtons.OK, MessageBoxIcon. Error)

Elself nCountLevelPause > 1 Then

'There are too much element of pause

nRet = 5

Me._DDDTrace.OutputTrace("L'attivazione viene interrotta perchè esistono ''' & nCountLevelPause & " livelli Pausa al posto di 1 solo", 45, "ImportLevels clsImport")

System.Windows.Forms.MessageBox.Show("L'attivazione non può essere eseguita perchè sono stati trovati " & nCountLevelPause & " livelli per la 'Pausa' al posto di 1. Rivedere il documento di MS Excel di analisi e impostare il livello 'Pausa' corretto", Me._DDDUtility.GetTitleMsgBox, MessageBoxButtons.OK, MessageBoxIcon.Error)

End If

Catch ex As Exception

n Ret = 1

Me._DDDTrace.OutputTrace("Errore durante l'attivazione dei livelli. Descrizione errore: " & ex.Message, 65, "ImportLevels clsImport")

System.Windows.Forms.MessageBox.Show(Me._DDDUtility.GetMsgErr(" Anomalia", ex.Message, "Consultare le tracce diagnostiche"), Me._DDDUtility.GetTitleMsgBox, Windows. Forms. MessageBoxButtons.OK, Windows.Forms.MessageBoxIcon.Error)

Finally

Me._DDDData.CloseObjectConnection(,,,,, Me._DDDUtility.GetKeyConn1, Me._DDDUtility.GetKeyConn4)

Me._DDDData.CloseObjectConnection(,,,,,, Me._DDDUtility.GetKeyConn3)

Me._DDDData.CloseObjectConnection(,,,,,, Me._DDDUtility.GetKeyConn2)

Me._DDDData.CloseObjectConnection(,,,,,, Me._DDDUtility.GetKeyConn1)

Me._DDDData.CloseObjectConnection(Me._DDDUtility.GetKeyConn1, Me._DDDUtility.GetKeyConn1)

'Me._DDDData.CloseObjectConnection(Me._DDDUtility.GetKeyConn1, Me._DDDUtility.GetKeyConn1,,, Me._DDDUtility.GetKeyConn1)

colLevels2 = Nothing

colLevels3 = Nothing

colLevels4 = Nothing

colIndex2 = Nothing

colIndex3 = Nothing

End Try

Return nRet

End Function

The preceding description and code examples are given to fully describe the preferred embodiment of the method of the present invention.

Although the invention has been described in detail for the purpose of illustration only, it is understood that such detail is solely for that purpose and that many variations, changes, additions and substitutions can be made therein by those of ordinary skill in the art without departing from the spirit and scope of the invention.

## Claims

1. Method and system for automatically performing the customization of a computer program for managing the workflow of business dossiers and of activities in organizations, **characterised by** the use of a spreadsheet program like Microsoft Excel to store the results of the business dossier flow analysis.

2. Method and system according to claim 1, **characterized by** the use of the spreadsheet program to automate the following steps: a. Creation of a structure of disk subfolders, corresponding to the dossier types and subtypes used in the organization that has to be managed with the program; b. Creation of a structure of disk subfolders, corresponding to the dossier management phases and subphases of the organization that has to be managed with the program; c. Creation of a structure of tables and data in the database used by the workflow management program, corresponding to the dossier types and subtypes used in the organization that has to be managed with the program; d. Creation of a structure of tables and data in the database used by the workflow management program, corresponding to the dossier management phases and subphases of the organization that has to be managed with the program.

3. Method and system according to claims 1 or 2, where the operation of the workflow management program is based on the folder structure and database tables and data generated, thus automating all the customization phase of the program.

4. Method and system according to claims 1 or 2, where all the documents, instructions, procedures and programs used during the operation of the workflow management program are stored in a folder structure that reflects the structure of the business dossier flow of the organization.

5. Method and system according to claims 1, 2 or 3, where all the customized database tables and data used during the operation of the workflow management program are stored in a database structure that reflects the structure of the business dossier flow of the organization.

6. Method and system according to claims 1, 2 or 3, where the second customization phase of translating the results of the analysis of the business dossier workflow of an organization into an informatics structure is automatically performed by programs and macros operating on a spreadsheet.

## Amended claims

### Amended claims in accordance with Rule 137(2) EPC.

1. Method for automatically performing the customization of a computer program for managing the workflow of business dossiers and of activities in organizations, **characterised by** the use of a spreadsheet program like Microsoft Excel to create configuration tables and folders that customize the operation of the program, according to the results of the business dossier flow analysis stored in the spreadsheet.

2. Method according to claim 1, **characterized by** the use of the spreadsheet program to automate the following steps:
a. Creation of a structure of disk subfolders, that will be used by the workflow management program to store documents related to the dossier types and subtypes used in the organization that has to be managed with the program;
b. Creation of a structure of disk subfolders, that will be used by the workflow management program to store documents related to the dossier management phases and subphases of the organization that has to be managed with the program;
c. Creation of a structure of tables and data in the database used to customize the operation of the workflow management program, corresponding to the dossier types and subtypes used in the organization that has to be managed with the program;
d. Creation of a structure of tables and data in the database used to customize the operation of the workflow management program, corresponding to the dossier management phases and subphases of the organization that has to be managed with the program.

3. Method according to claims 1 or 2, where the operation of the workflow management program is based on the folder structure and database tables and data generated, thus automating all the customization phase of the program.

4. Method according to claims 1 or 2, where all the documents, instructions, procedures and programs used during the operation of the workflow management program are stored in a folder structure that reflects the structure of the business dossier flow of the organization.

5. Method according to claims 1, 2 or 3, where all the customized database tables and data used during the operation of the workflow management program are stored in a database structure that reflects the structure of the business dossier flow of the organization.

6. Method according to claims 1, 2 or 3, where the second customization phase of translating the results of the analysis of the business dossier workflow of an organization into an informatics structure is automatically performed by programs and macros operating on a spreadsheet.
